# FASCICULE DE BREVET EUROPEEN

(11) **EP 3 899 419 B1**
(45) Date de publication et mention de la délivrance du brevet: **10.07.2024**
(21) Numéro de dépôt: 19817373.4
(22) Date de dépôt: 16.12.2019
(51) Int. Cl.: G01B 7/31, G04B 31/00, G04D 7/04

(54) **DISPOSITIF DE CONTROLE GEOMETRIQUE POUR MOBILES D'HORLOGERIE**
GEOMETRISCHE STEUERVORRICHTUNG FÜR UHRWERKE
GEOMETRIC CONTROL DEVICE FOR TIMEPIECE MOBILES

(30) Priorité: 18.12.2018 EP 18213554
(43) Date de publication de la demande: 27.10.2021
(73) Titulaire: ETA SA Manufacture Horlogère Suisse, 2540 Grenchen (CH)
(72) Inventeur: GANGUIN, M. Fabrice, 2740 Moutier (CH); WELZ, Erich, 2830 Courrendlin (CH)
(74) Mandataire: ICB SA
(86) Numéro de dépôt international: PCT/EP2019/085346
(87) Numéro de publication internationale: WO 2020/127046

(56) Documents cités:
- EP-A1- 2 887 007
- EP-A1- 3 081 997

## Description

### Domaine de l'invention

L'invention concerne un dispositif de contrôle géométrique pour mobiles d'horlogerie, comportant une poupée portant une première broche folle ou motorisée et définissant un premier axe de rotation et une contre-poupée portant une deuxième broche folle ou motorisée définissant un deuxième axe de rotation, agencées sur une semelle commune par rapport à laquelle au moins ladite poupée et/ou ladite contre-poupée est mobile selon au moins un degré de liberté en translation le long de moyens de guidage d'alignement selon une direction commune parallèle audit premier axe de rotation, et des moyens agencés pour assurer ou régler la coaxialité dudit deuxième axe de rotation par rapport audit premier axe de rotation.

L'invention concerne le domaine de l'outillage de métrologie, et plus particulièrement le domaine de l'outillage de contrôle en production, pour le cas particulier du contrôle dimensionnel et géométrique de mobiles horlogers.

### Arrière-plan de l'invention

Le contrôle dimensionnel et géométrique de composants horlogers est difficile à réaliser, en raison des très petites dimensions des composants, et des tolérances extrêmement faibles, souvent d'amplitude bien inférieure à la résolution des moyens de mesure polyvalents usuel, tels centres de mesure tridimensionnels ou similaire. De ce fait les contrôles en cours de production nécessitent souvent un prélèvement et un passage en salle de métrologie ou en laboratoire, pour une vérification longue et coûteuse, ou bien recourent à l'emploi d'outillages dédiés, très peu polyvalents, et très coûteux.

La préhension des mobiles est particulièrement délicate, car, du fait de leur faible diamètre, les parties arbrées ne pouvant pas comporter, comme en mécanique générale, des centres intérieurs pour des contrôles sur banc entre pointes, et les portées externes sont souvent trop courtes pour procurer un bon guidage en rotation. De ce fait le contrôle de tels mobiles est souvent effectué sur des vés, ce qui restreint le contrôle à une position horizontale dans l'espace, qui n'est en général pas représentative des positions de service ; de plus le réglage en hauteur des vés est souvent délicat à bien réaliser. Déjà difficile à bien réaliser en statique, le contrôle se complique encore quand il est nécessaire de mettre en rotation le mobile pour un contrôle dynamique, ou, tout simplement, pour mesurer un voile, un mal-plat ou autre. L'entraînement par courant d'air n'est pas adapté à toutes les géométries de mobiles, et les mécanismes connus d'entraînement par archet et fil en appui sont d'utilisation malcommode, en raison des problèmes de non-reproductibilité de la tension du fil, de son inclinaison, de son vieillissement avec détende de sa torsade, de son usure allant jusqu'à la rupture, de la pollution que le fil transporte, pour ne citer que les inconvénients principaux.

Les matériels connus ne sont pas polyvalents, et sont donc peu adaptés à un contexte de production variée avec la fabrication de nombreuses références.

Le double problème du maintien et de l'entraînement en rotation de mobiles d'horlogerie de longueur inférieure à 4 millimètres, avec des parties arbrées de diamètre voisin du dixième de millimètre, reste donc irrésolu, et leur contrôle reste une opération difficile et coûteuse.

### Résumé de l'invention

L'invention se propose d'apporter une solution industrielle à ce double problème, et de définir un mécanisme facile à utiliser, interchangeable et adapté à un changement de production en rendant facile le contrôle d'un nouveau produit, tout en restant économique, tant au niveau de l'investissement matériel que de la durée du contrôle, et assurant la justesse requise, et la reproductibilité des mesures.

A cet effet, l'invention concerne un dispositif de contrôle géométrique pour mobiles d'horlogerie selon la revendication 1.

### Description sommaire des dessins

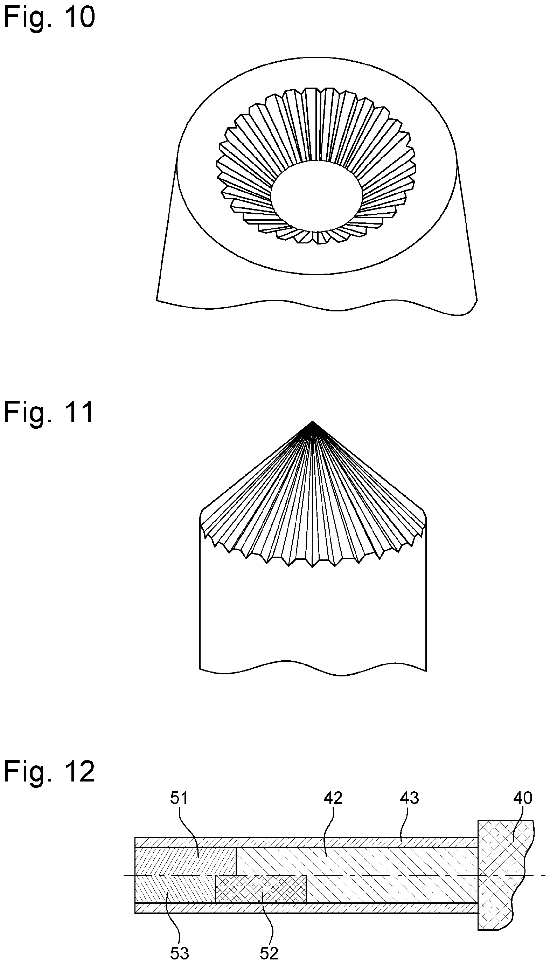

D'autres caractéristiques et avantages de l'invention apparaîtront à la lecture de la description détaillée qui va suivre, en référence aux dessins annexés, où :

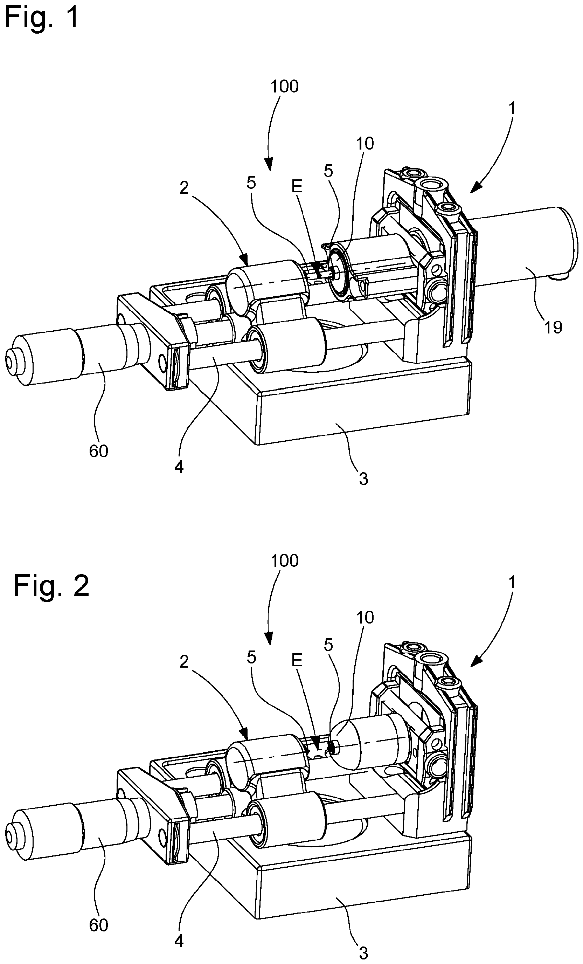

- la figure 1 représente, de façon schématisée, et en perspective, un dispositif selon l'invention, dans une variante compacte, qui constitue un posage standard, ici représenté dans une réalisation non limitative avec une poupée montée fixe sur une semelle, et porteuse d'une broche dans laquelle est inséré un centreur amovible interchangeable ; sur la même semelle, un guidage à colonnes guide une contre-poupée dans l'alignement de la poupée, elles délimitent ensemble un espace d'entrefer, dans lequel sera inséré un mobile à contrôler ; cette contre-poupée est équipée de la même façon que la poupée, avec une broche dans laquelle est inséré un autre centreur amovible interchangeable ; un micromètre permet un réglage fin de la position axiale de la contre-poupée par rapport à la poupée ; cette variante est motorisée, et comporte des moyens d'entraînement pour la mise en rotation de la broche de la poupée ;
- la figure 2 représente, de façon similaire à la figure 1, une variante simplifiée, non motorisée, dépourvue des moyens d'entraînement de la figure 1 ;

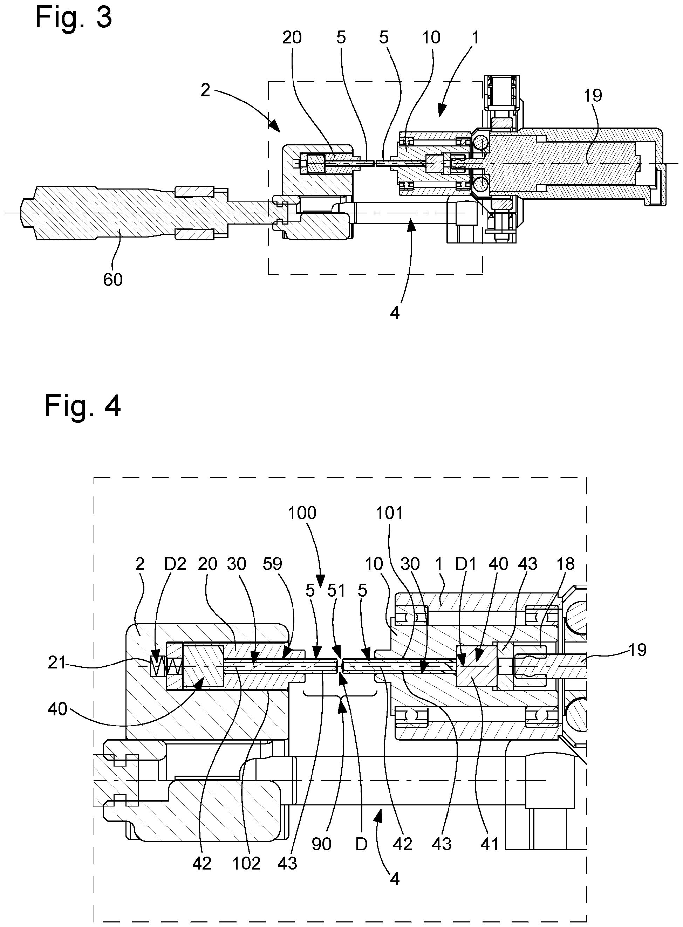

- la figure 3 représente, de façon schématisée, et en coupe par l'axe commun à la poupée et à la contre-poupée quand elles sont bien alignées, le dispositif de la figure 2, dans une position où la poupée et la contre-poupée sont dans une position rapprochée, avant leur écartement pour la présentation et l'insertion d'un composant mobile à contrôler ;
- la figure 4 est un détail de la partie centrale de la figure 3, et montre l'agencement de chaque centreur amovible interchangeable dans une variante particulière, non limitative, où une partie tubulaire extérieure comporte une surface externe cylindrique, qui coopère au plus juste avec un alésage que comporte la broche correspondante ; cette partie tubulaire entoure une âme polaire ferromagnétique ou magnétique, qui vient en appui, du côté opposé à l'espace d'entrefer, sur un aimant que porte la poupée ou la contre-poupée, ou bien qui vient au voisinage immédiat d'un tel aimant, cette âme polaire étant agencée pour canaliser les lignes de champ magnétique au voisinage de l'axe commun ; la partie tubulaire porte ici, non limitativement, un préhenseur du côté de l'espace d'entrefer ; le moteur entraîneur entraîne indirectement la broche de la poupée, au travers d'un montage cardan, ou d'un toc, ou de tout entraîneur similaire ;
- les figures 5 à 9 illustrent différentes combinaisons avantageuses de centreurs amovibles selon l'invention :
- la figure 5 comporte, du côté de l'entrefer, à la fois côté poupée et contre-poupée, une masse d'appui en rubis plat, derrière laquelle une masse polaire ferromagnétique ou magnétique assure un maintien du mobile en lévitation magnétique, parfaitement dans l'axe ;
- la figure 6, voisine de la figure 5, comporte, du côté de la poupée un rubis qui comporte un centrage en cône femelle, tandis que le micro-centreur de la contre-poupée est un rubis plat ;
- la figure 7 comporte, du côté de l'entrefer, à la fois côté poupée et contre-poupée, un préhenseur comportant un cône femelle d'appui avec une denture conique femelle, pour une préhension mécanique des extrémités d'un mobile ; ici aussi ces micro-centreurs sont représentés avec une masse polaire ferromagnétique ou magnétique qui peut aussi, seule, assurer un maintien du mobile en lévitation magnétique, parfaitement dans l'axe ;
- la figure 8 est l'inverse de la figure 7, les deux préhenseurs comportent ici une denture conique mâle ;
- la figure 9 montre une configuration adaptée à une forme particulière de mobile à mesurer, avec des diamètres différents côté poupée et contre-poupée ;
- la figure 10 est une vue de détail d'une denture conique femelle illustrée à la figure 7,
- la figure 11 est une vue de détail d'une denture conique femelle illustrée à la figure 8,
- la figure 12 est une double vue en coupe de deux variantes de centreurs non limitatives ; l'enveloppe tubulaire externe, de diamètre calibré et constant d'un centreur à l'autre, garantit l'interchangeabilité avec la poupée et la contre-poupée, dont les broches comportent le même alésage ;
- en partie haute de la figure12 est représenté un centreur avec un préhenseur en appui sur la masse polaire intérieure qui est elle-même en appui sur l'aimant de la poupée ou de la contre-poupée ;
- en partie basse de la figure 12, une masse d'appui non magnétique, typiquement en rubis ou similaire, précède une masse polaire intermédiaire, ferromagnétique ou magnétique, en appui sur l'âme polaire, et qui canalise le champ voire renforce le champ axial quand cette masse polaire intermédiaire est magnétique ;

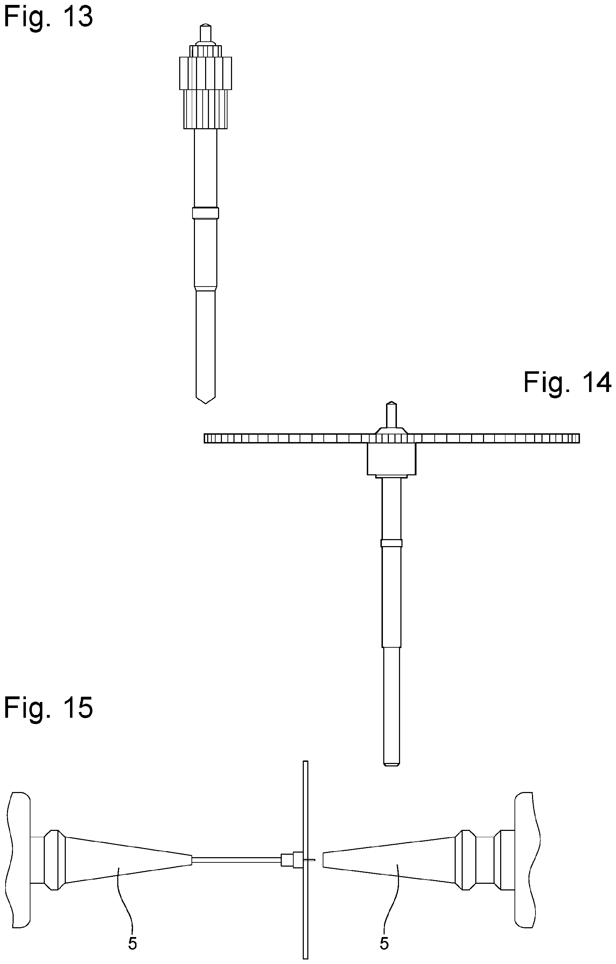

- la figure 13 représente, de façon schématisée et en élévation, un mobile sur lequel des contrôles dimensionnels sont à effectuer, de façon semi-statique, par exemple la longueur de la partie taillé, et les diamètres de différentes portées ; on voit que la proximité de la partie taillée avec une des extrémités rend sa préhension difficile avec des moyens classiques ;
- la figure 14 représente, de façon schématisée et en élévation, un autre mobile sur lequel des contrôles géométriques sont à effectuer, en l'occurrence des contrôles de battement, en dynamique, par exemple le battement simple du diamètre extérieur de la roue dentée par rapport aux deux portées d'extrémité de part et d'autre de la roue dentée, et le battement simple d'une des faces de la roue dentée par rapport à ces mêmes deux portées; là aussi la proximité de la grande roue avec une des extrémités rend sa préhension difficile avec des moyens classiques ;
- la figure 15 illustre la préhension du mobile de la figure 14 avec le dispositif selon l'invention, dont les centreurs sont dégagés sur leur partie avant, pour mieux guider le flux magnétique vers l'axe du mobile, pour un contrôle avec rotation de la poupée ;

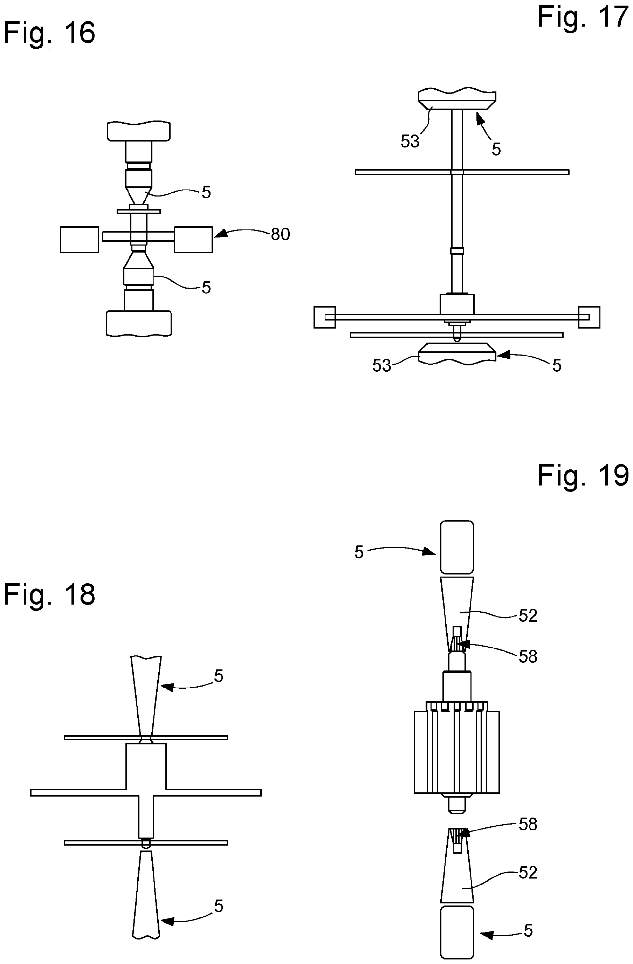

- la figure 16 illustre la préhension d'un autre mobile, avec maintien par des micro-pointes, face à des moyens de vision, notamment une caméra, que comporte le dispositif selon l'invention ; les rectangles à proximité du plus grand diamètre illustrent un exemple d'une zone de vision par une caméra, comme sur la figure 17 qui suit ; les rectangles étroits perpendiculaires à l'axe illustrent d'autres exemples de zones de surveillance optique, notamment pour vérifier l'absence de faux-rond, comme sur les figures 17 et 18 suivantes;
- la figure 17 illustre la préhension d'un autre mobile encore, entre un rubis de centrage opposé à un rubis plat, face à cette caméra, pour un contrôle avec rotation de la poupée ;
- la figure 18 illustre la préhension d'encore un autre mobile, avec maintien par deux dentures intérieures coniques, face à cette caméra, pour un contrôle avec rotation de la poupée ;
- la figure 19 illustre le cas particulièrement difficile de la préhension d'un pignon de moyenne, avec maintien par deux dentures intérieures coniques, face à cette caméra, pour un contrôle avec rotation de la poupée ;

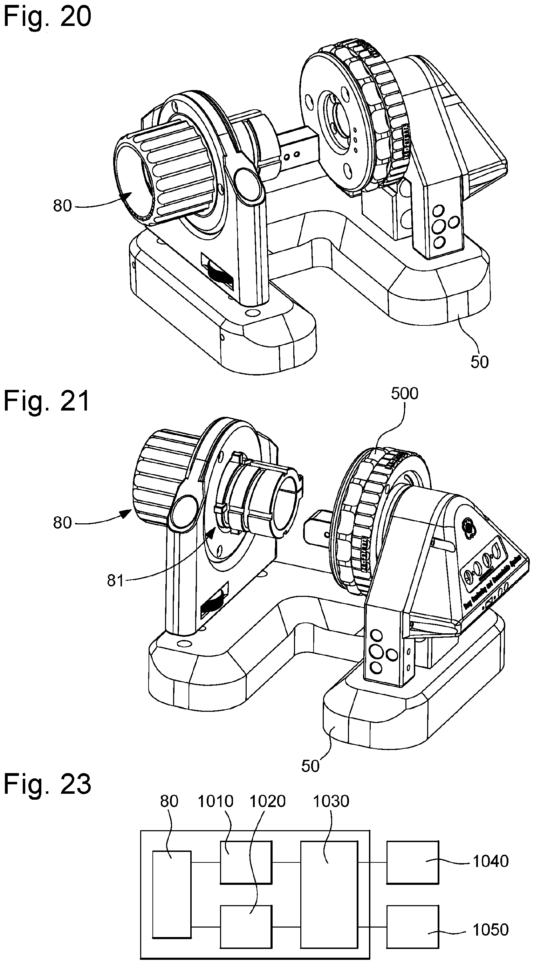

- la figure 20 représente, de façon schématisée, et en perspective, un dispositif selon l'invention, comportant un bâti porteur d'un plateau rotatif agencé pour recevoir le mécanisme de la figure 1 ou 2, ou pour constituer sa base support, et face auquel un autre élément de structure supporte une caméra et ses moyens de réglage ;
- la figure 21 est une autre vue en contre-champ du dispositif de la figure 20 ;

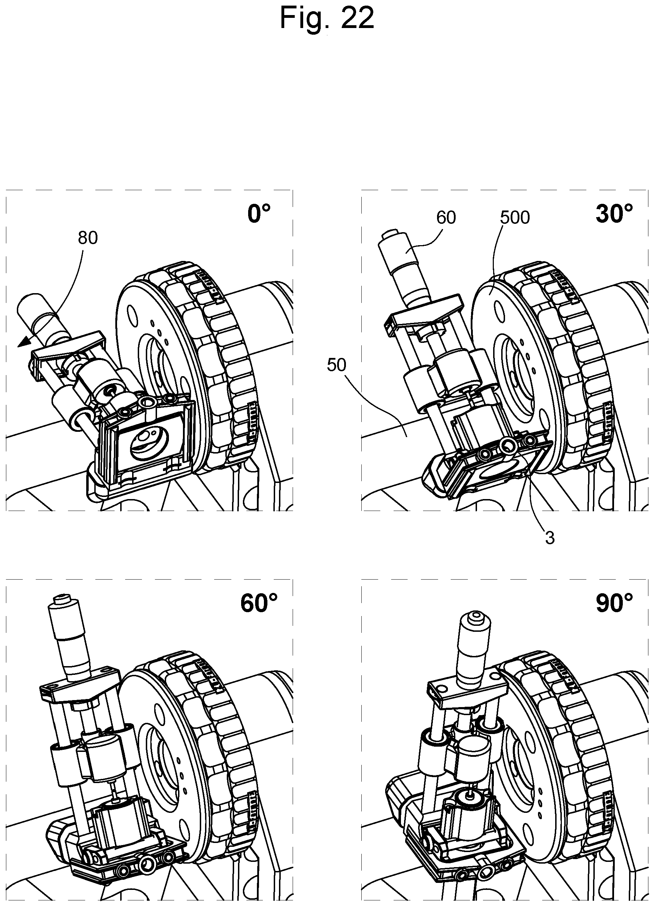

- la figure 22 représente, de façon schématisée, partielle, et en perspective, le dispositif complet, avec la semelle commune à la poupée et à la contre-poupée du mécanisme de la figure 1 qui est montée sur le plateau rotatif de la figure 20, dans quatre positions angulaires différentes, correspondant à quatre positions différentes du mobile à mesurer dans le champ de gravité ;
- la figure 23 est un schéma-blocs représentant un tel dispositif, avec des moyens d'analyse des images et/ou mesures faites par les moyens de vision par rapport à des valeurs de consigne, des moyens de calcul des écarts, et des moyens de liaison avec un système intégré de gestion de qualité produit et/ou de gestion de production, pour la correction des réglages des moyens de production en fonction des écarts ;

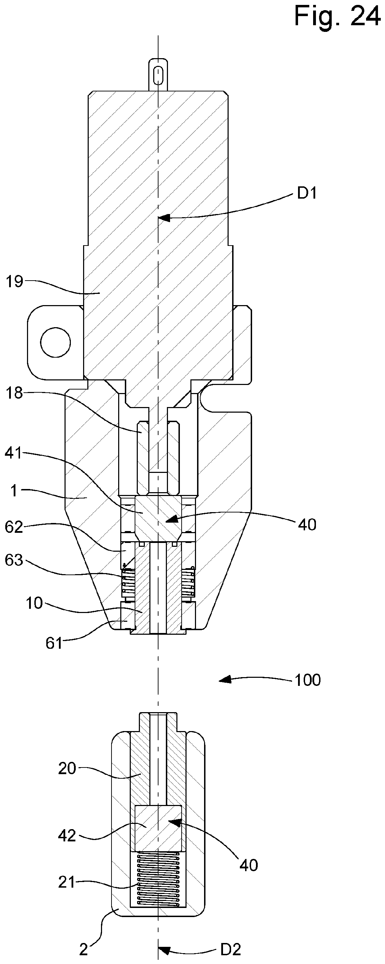

- la figure 24 représente, de façon similaire à la figure 4, une autre variante de l'invention.

### Description détaillée des modes de réalisation préférés

L'invention se propose de définir un mécanisme de contrôle facile à utiliser, interchangeable et adapté à un changement de production en rendant facile le contrôle d'un nouveau produit, tout en restant économique, tant au niveau de l'investissement matériel que de la durée du contrôle, et assurant la justesse requise, et la reproductibilité des mesures.

A cet effet, l'invention concerne un dispositif 100 de contrôle géométrique pour mobiles d'horlogerie. Tel que visible notamment sur les figures 1 et 2, ce dispositif 100 comporte une poupée 1 portant une première broche 10 mobile en rotation, folle ou motorisée, et avec un premier alésage 101 et définissant un premier axe de rotation D1, et une contre-poupée 2 portant une deuxième broche 20 folle ou motorisée et définissant un deuxième axe de rotation D2, agencées sur une semelle commune 3 par rapport à laquelle au moins la poupée 1 et/ou la contre-poupée 2 est mobile selon au moins un degré de liberté en translation le long de moyens de guidage d'alignement 4 selon une direction commune D parallèle au premier axe de rotation D1. Par exemple, tel qu'illustré, la poupée 1 est fixe, et la contre-poupée 2 est mobile le long de colonnes de guidage formant ces moyens de guidage d'alignement 4.

Le dispositif 100 comporte des moyens agencés pour assurer ou régler la coaxialité du deuxième axe de rotation D2 par rapport au premier axe de rotation D1. Dans le cas des figures, les moyens de guidage d'alignement 4 assurent cette coaxialité, et la position latérale de la contre-poupée 2 n'est pas réglable. Dans une variante non illustrée, la contre-poupée 2 peut être embarquée sur un chariot transversal, selon une direction orthogonale au premier axe de rotation D1, et comporter des moyens micrométriques d'ajustement latéral.

Selon l'invention, le dispositif 100 comporte une pluralité de centreurs amovibles 5 interchangeables, et au moins la première broche 10 et/ou la deuxième broche 20 comporte des moyens de réception 30, qui sont agencés pour loger coaxialement un tel centreur amovible 5.

Et au moins la poupée 1 et/ou la contre-poupée 2 comporte des moyens de traction 40, qui sont agencés pour exercer sans contact une traction d'un tel centreur amovible 5 axialement selon la direction commune D, à l'opposé d'un espace 90 d'entrefer séparant la poupée 1 et la contre-poupée 2. Plus particulièrement, et tel qu'illustré sur les figures, à la fois la première broche 10 et la deuxième broche 20 comportent de tels moyens de réception 30, et à la fois la poupée 1 et la contre-poupée 2 comportent des moyens de traction 40.

Dans une variante simple, précise, et économique, les moyens de réception 30 comportent des alésages, et peuvent comporter une surface d'appui de butée axiale.

Notamment la deuxième broche 20 comporte un deuxième alésage 102 de même diamètre que le premier alésage 101, et le dispositif 100 comporte une pluralité de micro-centreurs 5 amovibles et interchangeables, agencés chacun pour être inséré indifféremment dans le premier alésage 101 ou le deuxième alésage 102, et comportant chacun une portée périphérique 590 de diamètre agencé pour son ajustement glissant juste avec le premier alésage 101 ou le deuxième alésage 102. Chaque micro-centreur 5 comporte une âme polaire 42 ferromagnétique ou magnétique, agencée pour coopérer en attraction avec un pôle magnétique 41 que comporte la poupée 1 et/ou la contre-poupée 2, et qui définit un champ magnétique de révolution autour du premier axe de rotation D1 dans un espace 90 séparant la poupée 1 et la contre-poupée 2, ou étant constitué par une âme polaire 42.

L'invention est décrite ici dans sa version la plus simple avec une seule poupée 1 et une seule contre-poupée 2, mais on comprend que le dispositif peut comporter davantage de contre-poupées agencées pour coopérer avec la même poupée 1. Toutefois, la conception de l'invention avec de tels centreurs amovibles 5 interchangeables est tellement simple et facile d'emploi que le changement d'équipement du dispositif de contrôle 100 est très rapide, et la configuration illustrée se révèle suffisante.

Plus particulièrement, les moyens de traction 40 comportent au moins un pôle magnétique 41, notamment au moins un aimant, qui est agencé pour attirer une âme polaire 42 ferromagnétique ou magnétique que comporte chaque centreur amovible 5, vers une position arrière de butée sur une surface d'appui de butée, laquelle peut être une surface du pôle magnétique 41, ou encore d'une cloison à travers laquelle peut circuler, de façon sensiblement axiale, le champ magnétique émis par ce pôle magnétique 41. L'invention est illustrée sur les figures avec des aimants permanents, un tel pôle magnétique 41 peut naturellement aussi comporter au moins un électro-aimant.

Les figures 3 et 4 montrent l'agencement axial de ces aimants 41, qui peuvent être renforcés par des aimants secondaires 430, tel que visible sur la poupée 1, pour renforcer le champ magnétique.

L'important est de canaliser le champ magnétique au voisinage de l'axe commun D. A cet effet, les centreurs amovibles 5 sont agencés pour au moins guider le flux magnétique selon cette direction, voire même le rapprocher de l'axe géométrique D, tel que visible sur la figure 15, voire encore renforcer le champ par la mise en série d'une masse polaire 52 ferromagnétique ou magnétique, comme on le verra plus loin.

Ainsi, de façon particulière, au moins un centreur amovible 5 comporte des moyens de concentration d'un champ magnétique axial, auquel il est soumis à une première extrémité axiale opposée à l'espace 90 et/ou que génère cet au moins un centreur amovible 5, autour de la direction commune D, à une deuxième extrémité tournée vers l'espace 90. La figure 15 illustre ainsi la préhension d'un mobile, avec des centreurs 5 qui sont dégagés sur leur partie avant, pour mieux guider le flux magnétique vers l'axe D du mobile, pour un contrôle avec rotation de la poupée 1. Le document EP28887007B1 au nom de MONTRES BREGUET SA décrit un posage avec un tel concentrateur de flux.

De façon particulière, au moins un micro-centreur 5 constitue une cartouche qui comporte un corps tubulaire 43 dont le diamètre extérieur est agencé pour son ajustement glissant juste avec le premier alésage 101 ou le deuxième alésage 102, ce corps tubulaire 43 renfermant une âme polaire 42 ferromagnétique ou magnétique.

Naturellement, si le dispositif 100 selon l'invention est avantageusement conçu pour la préhension de composants ferromagnétiques ou similaires, il est aussi capable de traiter le cas de matériaux amagnétiques. Aussi, plus particulièrement, au moins un centreur amovible 5 comporte, du côté de l'espace 90, un préhenseur 51, qui est agencé pour coopérer par contact mécanique avec une extrémité axiale d'un mobile d'horlogerie. Ce contact mécanique peut se substituer à l'interaction magnétique ou venir en complément de celle-ci. Plus particulièrement, un tel préhenseur 51 est agencé pour entraîner en rotation une extrémité axiale d'un mobile d'horlogerie, quand le centreur amovible 5 est soumis à une rotation qui lui est imprimée par la poupée 1 ou la contre-poupée 2.

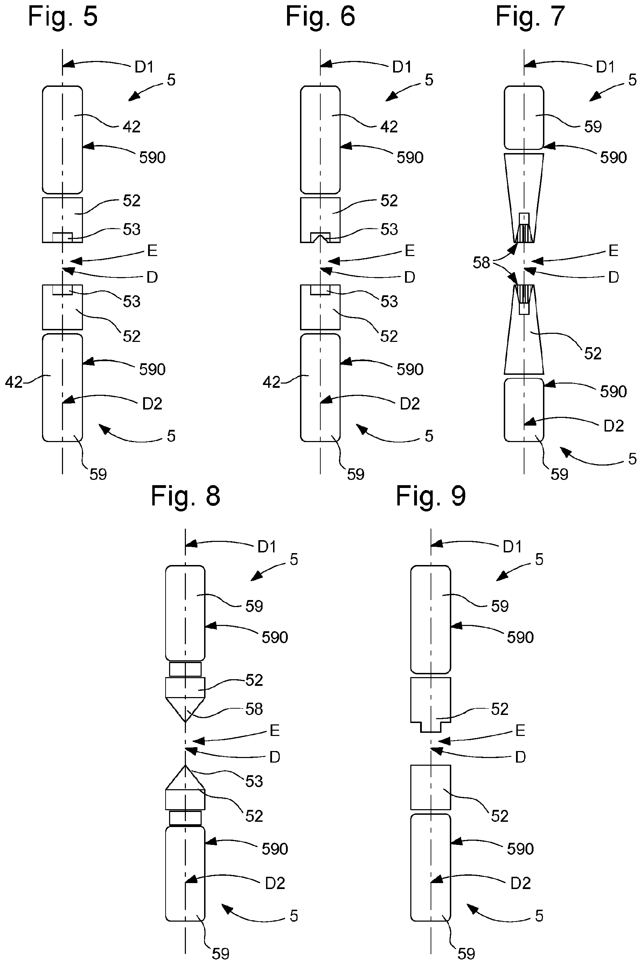

Plus particulièrement, tel que visible sur les figures 7, 8, 10, 12, 19, le préhenseur 51 comporte une denture conique d'appui 58, mâle ou femelle, agencée pour coopérer avec une extrémité axiale d'un mobile d'horlogerie pour l'entraînement en rotation de ce mobile. Ainsi, lorsque le mobile à contrôler est amagnétique, cette denture conique 58 assure la tenue, le centrage, et l'entraînement de ce mobile.

Le préhenseur 51 peut être réalisé en différents matériaux, notamment et non limitativement acier trempable, acier inoxydable, matériau fritté tel que carbure de tungstène, ou autre. Avantageusement, ce préhenseur 51 comporte, au niveau de sa surface d'entraînement d'un mobile, une rugosité constante, comprise entre 2 micromètres Ra et 5 micromètres Ra, pour un bon entraînement par friction de ce mobile.

Pour certaines applications, le préhenseur 51 peut aussi comporter un simple cône lisse, mâle ou femelle.

Dans une réalisation particulière, au moins un centreur amovible 5 comporte, du côté de l'espace 90, une masse polaire 52 ferromagnétique ou magnétique, qui est agencée pour coopérer en attraction ou en répulsion magnétique avec une extrémité axiale magnétique ou ferromagnétique d'un mobile d'horlogerie. Plus particulièrement, cette masse polaire 52 est agencée pour exercer ou pour transmettre à une extrémité axiale magnétique ou ferromagnétique d'un mobile d'horlogerie un couple d'entraînement en rotation.

Dans une autre réalisation particulière, au moins un centreur amovible 5 qui comporte une telle masse polaire 52 ferromagnétique ou magnétique comporte encore, du côté de l'espace 90, une masse d'appui 53, qui est agencée pour limiter la course axiale d'une extrémité axiale d'un mobile d'horlogerie. La figure 5 comporte, du côté de l'entrefer 90, à la fois côté poupée 1 et contre-poupée 2, une telle masse d'appui 53 en rubis plat, derrière laquelle une masse polaire 52 ferromagnétique ou magnétique assure un maintien du mobile en lévitation magnétique, parfaitement dans l'axe. Le pivotement magnétique d'un mobile est exposé dans le document EP2450758B1 au nom de MONTRES BREGUET SA. Plus particulièrement la masse d'appui 53 est en rubis ou similaire.

Dans une réalisation particulière, la contre-poupée 2 comporte un moyen de rappel élastique 21, qui est agencé pour repousser vers l'espace 90 la deuxième broche 20, ou un centreur amovible 5 que porte la deuxième broche 20. En particulier, ce moyen de rappel élastique 21 tendant à pousser la contre-poupée 20 vers la poupée 10 et à amortir le recul de la contre-poupée, est un ressort ou similaire, taré notamment et non limitativement à 0.2 N.

Plus particulièrement, au moins la poupée 1 comporte des premiers moyens de motorisation 19, qui sont agencés pour entraîner en rotation la première broche 10 autour du premier axe de rotation D1, et comporte, entre les premiers moyens de motorisation 19 et la première broche 10, des premiers moyens d'accouplement 18 de type cardan ou similaire, pour assurer une rotation sans contrainte de la première broche 10, et pour s'affranchir de tout défaut d'alignement du moteur. Tel que visible sur la figure 4, l'entraînement de la première broche 10 de la poupée 1 se fait par l'intermédiaire de son aimant 41, l'entraînement est donc indirect, avec l'avantage que l'erreur de battement ou d'alignement du moteur n'influence pas la rotation de la broche.

Dans une réalisation particulière non illustrée, au moins la contre-poupée 2 comporte des deuxièmes moyens de motorisation 17, qui sont agencés pour entraîner en rotation la deuxième broche 20 autour du deuxième axe de rotation D2, et comporte, entre les deuxièmes moyens de motorisation 17 et la deuxième broche 20, des deuxièmes moyens d'accouplement 16 de type cardan ou similaire pour assurer une rotation sans contrainte de la deuxième broche 20.

Plus particulièrement, tel que visible sur les figures 1, 2, 3, et 22, le dispositif 100 comporte des moyens de réglage et/ou de mesure micrométrique 60 de la position relative de la contre-poupée 2 par rapport à la poupée 1 selon la direction commune D.

Dans une réalisation particulière non illustrée, le dispositif 100 comporte des moyens de réglage latéral 70 de la position du deuxième axe de rotation D2 par rapport au premier axe de rotation D1.

Plus particulièrement, les corps de la poupée 1, de la première broche 10, de la contre-poupée 2 et de la deuxième broche 20 sont en matériau amagnétique, tel que laiton, notamment laiton rhodié, ou similaire, afin de ne pas diffuser le flux magnétique en éloignement de la direction commune D.

Dans une réalisation particulière non illustrée, la poupée 1 et/ou la contre-poupée 2 comporte au moins une jauge de contrainte pour la mesure de l'effort axial selon la direction commune D, ou pour la comparaison à une valeur de consigne.

La figure 24 illustre une variante dans laquelle la poupée 1 comporte deux roulements de guidage 61 et 62, entre lesquels est agencé un ressort 63 agencé pour compenser le jeu axial et radial de ces roulements. La contre-poupée 2 comporte un ressort 21 placé à l'arrière de la deuxième masse polaire 42, et qui permet un amortissement au niveau de cette contre-poupée.

Plus particulièrement, tel que visible sur les figures 20 et 21, le dispositif 100 comporte un bâti principal 50, qui est agencé pour porter directement ou indirectement la semelle commune 3, et pour porter des moyens de vision 80 agencés pour observer et/ou mesurer un mobile d'horlogerie maintenu par deux centreurs amovibles 5 interchangeables, dans l'espace 90, et le dispositif 100 comporte des moyens de réglage en position 81 des moyens de vision 80, tels que pas de vis ou similaire.

De façon avantageuse, le bâti principal 50 est agencé pour porter indirectement la semelle commune 3 au travers d'au moins un plateau rotatif 500, motorisé ou non, agencé pour présenter un mobile d'horlogerie dans différentes positions dans le champ de gravité.

Plus particulièrement, le dispositif 100 comporte des moyens d'analyse 1010 des images et/ou mesures faites par les moyens de vision 80 par rapport à des valeurs de consigne, des moyens de calcul des écarts 1020, et des moyens de liaison 1030 avec un système intégré de gestion de qualité produit 1040 et/ou de gestion de production 1050, pour la correction des réglages des moyens de production en fonction des écarts.

En somme, les centreurs amovibles 5 selon l'invention, qui sont réellement des micro-centreurs en raison de leurs faibles dimensions d'extrémité au niveau du mobile à contrôler, sont simples, peu coûteux, facilement interchangeables, bien adaptés aux différents besoins, et utilisables pour divers moyens de mesure, et notamment mais non limitativement optiques. Les aimants que comportent la poupée et la contre-poupée assurent deux fonctions :
- attirer magnétiquement chaque micro-centreur dans la broche respective, et ;
- induire un champ magnétique dans les micro-centreurs, qui concentrent par ailleurs le flux magnétique au voisinage immédiat de l'axe du mobile à contrôler.

L'invention constitue ainsi un dispositif microtechnique permettant le maintien et la mise en rotation de microcomposants entre un système constitué de broche et contre-broche. Chaque broche est constituée de telle sorte que des micro-centreurs peuvent être insérés dans celles-ci avec une fixation facile et rapide, par un effet magnétique attractif. Si le composant est ferromagnétique, celui-ci sera tenu par le même champ magnétique. Si les composants sont non magnétiques, ceux-ci peuvent être tenus entre les micro-centreurs de la broche et de la contre-broche par centrage mécanique. La broche dite entraîneuse comporte ainsi un double effet magnétique, tout en offrant une mise en rotation du composant de manière parfaitement circulaire. La contre-broche, quant à elle, reste, selon son mode d'exécution, ou bien fixe sans rotation, ou bien folle en rotation, ou bien encore motorisée et synchrone avec la broche principale. Dans le cadre de composants non ferromagnétiques et/ou non constitués de pivots, des micro-centreurs spécifiques garantissent aisément le maintien, l'alignement et la mise en rotation du composant concerné.

Ce dispositif constitue une innovation dans le domaine horloger où il constitue le seul système de tenue et de mise en rotation de microcomposants de tout genre et de toute matière, concernés par à des mesures de battement, de localisation ou de dimensions.

Enfin, le dispositif complet, tel qu'illustré aux figures 20 et 21, est extrêmement compact (environ 200 millimètres au cube) et est ainsi très facile à intégrer dans une ligne de production. L'accessibilité pour un manipulateur robotisé est de surcroît excellente.

## Revendications

1. Dispositif (100) de contrôle géométrique pour mobiles d'horlogerie, comportant une poupée (1) portant une première broche (10) mobile en rotation et avec un premier alésage (101) définissant un premier axe de rotation (D1) et une contre-poupée (2) portant une deuxième broche (20) définissant un deuxième axe de rotation (D2), agencées sur une semelle commune (3) par rapport à laquelle au moins ladite poupée (1) et/ou ladite contre-poupée (2) est mobile selon au moins un degré de liberté en translation le long de moyens de guidage d'alignement (4) selon une direction commune (D) parallèle audit premier axe de rotation (D1), ledit dispositif (100) comportant des moyens agencés pour assurer ou régler la coaxialité dudit deuxième axe de rotation (D2) par rapport audit premier axe de rotation (D1), ladite deuxième broche (20) comportant un deuxième alésage (102) de même diamètre que ledit premier alésage (101), ledit dispositif (100) comportant une pluralité de micro-centreurs (5) amovibles et interchangeables, agencés chacun pour être inséré indifféremment dans ledit premier alésage (101) ou ledit deuxième alésage (102), et comportant chacun une portée périphérique (590) de diamètre agencé pour son ajustement glissant juste avec ledit premier alésage (101) ou ledit deuxième alésage (102), **caractérisé en ce que** chaque dit micro-centreur (5) comporte une âme polaire (42) ferromagnétique ou magnétique agencée pour coopérer en attraction avec un pôle magnétique (41) que comporte ladite poupée (1) et/ou ladite contre-poupée (2) et qui définit un champ magnétique de révolution autour dudit premier axe de rotation (D1) dans un espace (90) séparant ladite poupée (1) et ladite contre-poupée (2), ou est constitué par une dite âme polaire (42).

2. Dispositif (100) selon la revendication 1, **caractérisé en ce que** ladite contre-poupée (2) comporte des moyens de rappel élastique (21) tendant à pousser ladite contre-poupée (20) vers ladite poupée (10) et à amortir le recul de ladite contre-poupée, et tarés à 0.2 N.

3. Dispositif (100) selon la revendication 1, **caractérisé en ce qu'**au moins un dit micro-centreur (5) constitue une cartouche qui comporte un corps tubulaire (43) dont le diamètre extérieur est agencé pour son ajustement glissant juste avec ledit premier alésage (101) ou deuxième alésage (102), lequel corps tubulaire (43) renfermant une dite âme polaire (42) ferromagnétique ou magnétique.

4. Dispositif (100) selon la revendication 1, **caractérisé en ce qu'**au moins un dit micro-centreur (5) comporte des moyens de concentration d'un champ magnétique axial, auquel il est soumis à une première extrémité axiale opposée audit espace (90) et/ou que génère ledit au moins un dit centreur amovible (5), autour de ladite direction commune (D), à une deuxième extrémité tournée vers ledit espace (90).

5. Dispositif (100) selon la revendication 4, **caractérisé en ce qu'**au moins un dit micro-centreur (5) constitue une cartouche qui comporte un corps tubulaire (43) dont le diamètre extérieur est agencé pour son ajustement glissant juste avec ledit premier alésage (101) ou deuxième alésage (102), lequel corps tubulaire (43) renfermant une dite âme polaire (42) ferromagnétique ou magnétique et et constituant des dits moyens de concentration dudit champ magnétique axial.

6. Dispositif (100) selon la revendication 1, **caractérisé en ce qu'**au moins un dit micro-centreur (5) comporte, du côté dudit espace (90), un préhenseur (51) agencé pour coopérer par contact mécanique avec une extrémité axiale d'un mobile d'horlogerie, pour entraîner en rotation ladite extrémité axiale quand ledit micro-centreur (5) est soumis à une rotation qui lui est imprimée par ladite poupée (1) ou ladite contre-poupée (2).

7. Dispositif (100) selon la revendication 6, **caractérisé en ce que** ledit préhenseur (51) comporte une denture conique d'appui (58), mâle ou femelle, agencée pour coopérer avec une extrémité axiale d'un mobile d'horlogerie pour l'entraînement en rotation dudit mobile.

8. Dispositif (100) selon la revendication 6, **caractérisé en ce que** ledit préhenseur (51) comporte, au niveau de sa surface d'entraînement d'un dit mobile, une rugosité comprise entre 2 micromètres Ra et 5 micromètres Ra.

9. Dispositif (100) selon la revendication 1, **caractérisé en ce qu'**au moins un dit micro-centreur (5) comporte, du côté dudit espace (90), une masse polaire (52) ferromagnétique ou magnétique agencée pour coopérer en attraction ou en répulsion magnétique avec une extrémité axiale magnétique ou ferromagnétique d'un mobile d'horlogerie, ladite masse polaire (52) étant juxtaposée ou confondue avec ladite âme polaire (42).

10. Dispositif (100) selon la revendication 9, **caractérisé en ce que** ladite masse polaire (52) est agencée pour transmettre à une extrémité axiale magnétique ou ferromagnétique d'un mobile d'horlogerie un couple d'entraînement en rotation.

11. Dispositif (100) selon la revendication 1, **caractérisé en ce que** au moins un dit micro-centreur (5) comporte, du côté dudit espace (90), une masse d'appui (53) en matériau plus dur que les mobiles d'horlogerie à contrôler, ou en rubis, qui est agencée pour limiter la course axiale d'une extrémité axiale d'un mobile d'horlogerie.

12. Dispositif (100) selon la revendication 1, **caractérisé en ce que** au moins ladite poupée (1) comporte des premiers moyens de motorisation (19) agencés pour entraîner en rotation ladite première broche (10) autour dudit premier axe de rotation (D1), et comporte entre lesdits premiers moyens de motorisation (19) et ladite première broche (10) des premiers moyens d'accouplement (18) de type cardan pour assurer une rotation sans contrainte de ladite première broche (10).

13. Dispositif (100) selon la revendication 12, **caractérisé en ce que** au moins ladite contre-poupée (2) comporte des deuxièmes moyens de motorisation (17) agencés pour entraîner en rotation ladite deuxième broche (20) autour dudit deuxième axe de rotation (D2), et synchronisables avec lesdits premiers moyens de motorisation, et comporte entre lesdits deuxièmes moyens de motorisation (17) et ladite deuxième broche (20) des deuxièmes moyens d'accouplement (16) de type cardan pour assurer une rotation sans contrainte de ladite deuxième broche (20).

14. Dispositif (100) selon la revendication 1, caractérisé en ce ladite deuxième broche (20) est folle en rotation.

15. Dispositif (100) selon la revendication 1, **caractérisé en ce que** ledit dispositif (100) comporte des moyens de réglage et/ou de mesure micrométrique (60) de la position relative de ladite contre-poupée (2) par rapport à ladite poupée (1) selon ladite direction commune (D).

16. Dispositif (100) selon la revendication 1, **caractérisé en ce que** ledit dispositif (100) comporte des moyens de réglage latéral (70) de la position dudit deuxième axe de rotation (D2) par rapport audit premier axe de rotation (D1).

17. Dispositif (100) selon la revendication 1, **caractérisé en ce que** les corps de ladite poupée (1), de ladite première broche (10), de ladite contre-poupée (2) et de ladite deuxième broche (20), sont en matériau amagnétique afin de ne pas diffuser le flux magnétique en éloignement de ladite direction commune (D).

18. Dispositif (100) selon la revendication 1, **caractérisé en ce que** ladite poupée (1) et/ou ladite contre-poupée (2) comporte au moins une jauge de contrainte pour la mesure de l'effort axial selon ladite direction commune (D), et/ou pour la comparaison à une valeur de consigne dudit effort axial.

19. Dispositif (100) selon la revendication 1, **caractérisé en ce que** ledit dispositif (100) comporte un bâti principal (50) agencé pour porter directement ou indirectement ladite semelle commune (3), et pour porter des moyens de vision (80) agencés pour observer et/ou mesurer un mobile d'horlogerie maintenu par deux dits micro-centreurs (5), dans ledit espace (90), et comportant des moyens de réglage en position (81) desdits moyens de vision (80).

20. Dispositif (100) selon la revendication 19, **caractérisé en ce que** ledit bâti principal (50) est agencé pour porter indirectement ladite semelle commune (3) au travers d'au moins un plateau rotatif (500) agencé pour présenter un dit mobile d'horlogerie dans différentes positions dans le champ de gravité.

21. Dispositif (100) selon la revendication 19, **caractérisé en ce que** ledit dispositif (100) comporte des moyens d'analyse (1010) des images et/ou mesures faites par lesdits moyens de vision (80) par rapport à des valeurs de consigne, des moyens de calcul des écarts (1020), et des moyens de liaison (1030) avec un système intégré de gestion de qualité produit (1040) et/ou de gestion de production (1050), pour la correction des réglages des moyens de production en fonction desdits écarts.

## Patentansprüche

1. Vorrichtung (100) zur geometrischen Kontrolle für Drehteile für die Uhrmacherei, umfassend einen Spindelstock (1), der eine erste Spindel (10) trägt, die drehbeweglich ist und eine erste Bohrung (101) aufweist, die eine erste Drehachse (D1) festlegt, und einen Reitstock (2), der eine zweite Spindel (20) trägt, die eine zweite Drehachse (D2) festlegt, auf einer gemeinsamen Sohle (3) angeordnet sind, in Bezug auf die mindestens der Spindelstock (1) und/oder der Reitstock (2) gemäß mindestens einem Freiheitsgrad in Translation entlang von Ausrichtungsführungsmitteln (4) in einer gemeinsamen Richtung (D) parallel zur ersten Drehachse (D1) beweglich ist, wobei die Vorrichtung (100) Mittel umfasst, die so angeordnet sind, dass sie die Koaxialität der zweiten Drehachse (D2) in Bezug auf die erste Drehachse (D1) sicherstellen oder regeln, wobei die zweite Spindel (20) eine zweite Bohrung (102) mit demselben Durchmesser wie die erste Bohrung (101) aufweist, wobei die Vorrichtung (100) eine Vielzahl von entfernbaren und austauschbaren Mikrozentrierungen (5) aufweist, die jeweils so angeordnet sind, dass sie unterschiedslos in die erste Bohrung (101) oder die zweite Bohrung (102) eingesetzt werden können, und jeweils eine periphere Auflagefläche (590) mit einem Durchmesser aufweisen, der für ihre Gleitpassung genau mit der ersten Bohrung (101) oder der zweiten Bohrung (102) angeordnet ist, **dadurch gekennzeichnet, dass** jeder Mikrozentrierer (5) einen ferromagnetischen oder magnetischen Polkern (42) aufweist, der so angeordnet ist, dass er in Anziehung mit einem Magnetpol (41) zusammenwirkt, den der Spindelstock (1) und/oder der Reitstock (2) aufweist und der ein magnetisches Rotationsfeld um die erste Drehachse (D1) in einem Raum (90) festlegt, der den Spindelstock (1) und den Reitstock (2) trennt, oder aus einem solchen Polkern (42) besteht.

2. Vorrichtung (100) nach Anspruch 1, **dadurch gekennzeichnet, dass** der Reitstock (2) elastische Rückstellmittel (21) aufweist, die dazu tendieren, den Reitstock (20) in Richtung des Spindelstocks (10) zu drücken und den Rückstoß des Reitstocks zu dämpfen, und die auf 0,2 N tariert sind.

3. Vorrichtung (100) nach Anspruch 1, **dadurch gekennzeichnet, dass** mindestens ein Mikrozentrierer (5) eine Patrone bildet, die einen röhrenförmigen Körper (43) umfasst, dessen Außendurchmesser so angeordnet ist, dass er genau in die erste Bohrung (101) oder die zweite Bohrung (102) gleitet, wobei der röhrenförmige Körper (43) einen ferromagnetischen oder magnetischen Polkern (42) umschließt.

4. Vorrichtung (100) nach Anspruch 1, **dadurch gekennzeichnet, dass** mindestens ein besagter Mikrozentrierer (5) Mittel zur Konzentration eines axialen Magnetfelds aufweist, dem er an einem ersten axialen Ende gegenüber dem Raum (90) ausgesetzt ist und/oder das der mindestens eine besagte abnehmbare Zentrierer (5) um die gemeinsame Richtung (D) an einem zweiten Ende erzeugt, das dem Raum (90) zugewandt ist.

5. Vorrichtung (100) nach Anspruch 4, **dadurch gekennzeichnet, dass** mindestens ein Mikrozentrierer (5) eine Patrone bildet, die einen rohrförmigen Körper (43) umfasst, dessen Außendurchmesser so angeordnet ist, dass er gleitend genau in die erste Bohrung (101) oder die zweite Bohrung (102) passt, wobei der rohrförmige Körper (43) einen ferromagnetischen oder magnetischen Polkern (42) umschließt und die Mittel zur Konzentration des axialen Magnetfelds bildet.

6. Vorrichtung (100) nach Anspruch 1, **dadurch gekennzeichnet, dass** mindestens einer der genannten Mikrozentrierer (5) auf der Seite des genannten Raums (90) einen Greifer (51) aufweist, der so angeordnet ist, dass er durch mechanischen Kontakt mit einem axialen Ende eines Drehteils für die Uhrmacherei zusammenwirkt, um das genannte axiale Ende in Drehung zu versetzen, wenn der genannte Mikrozentrierer (5) einer Drehung unterworfen wird, die ihm von dem Spindelstock (1) oder dem Reitstock (2) aufgeprägt wird.

7. Vorrichtung (100) nach Anspruch 6, **dadurch gekennzeichnet, dass** der Greifer (51) eine konische Stützverzahnung (58), Stecker oder Buchse, aufweist, die so angeordnet ist, dass sie mit einem axialen Ende eines Drehteils für die Uhrmacherei zusammenwirkt, um den Drehteil in Drehung zu versetzen.

8. Vorrichtung (100) nach Anspruch 6, **dadurch gekennzeichnet, dass** der Greifer (51) an seiner Antriebsfläche eines besagten Bewegers eine Rauheit zwischen 2 Mikrometern Ra und 5 Mikrometern Ra aufweist.

9. Vorrichtung (100) nach Anspruch 1, **dadurch gekennzeichnet, dass** mindestens einer der Mikrozentrierer (5) auf der Seite des Raums (90) eine ferromagnetische oder magnetische Polmasse (52) aufweist, die so angeordnet ist, dass sie in magnetischer Anziehung oder magnetischer Abstoßung mit einem magnetischen oder ferromagnetischen axialen Ende eines Drehteils für die Uhrmacherei zusammenwirkt, wobei die genannte Polmasse (52) neben dem genannten Polkern (42) liegt oder mit diesem verschmolzen ist.

10. Vorrichtung (100) nach Anspruch 9, **dadurch gekennzeichnet, dass** die Polmasse (52) so angeordnet ist, dass sie auf ein magnetisches oder ferromagnetisches axiales Ende eines Drehteils für die Uhrmachrei ein Drehantriebsdrehmoment überträgt.

11. Vorrichtung (100) nach Anspruch 1, **dadurch gekennzeichnet, dass** mindestens ein Mikrozentrierer (5) auf der Seite des Raums (90) eine Stützmasse (53) aus einem härteren Material als die zu kontrollierenden Drehteile für die Uhrmacherei oder aus Rubin aufweist, die so angeordnet ist, dass sie den axialen Weg eines axialen Endes eines Drehteils für die Uhrmacherei begrenzt.

12. Vorrichtung (100) nach Anspruch 1, **dadurch gekennzeichnet, dass** mindestens der Spindelstock (1) erste Motorisierungsmittel (19) umfasst, die so angeordnet sind, dass sie die erste Spindel (10) um die erste Drehachse (D1) in Drehung versetzen, und zwischen den ersten Motorisierungsmitteln (19) und der ersten Spindel (10) erste Kupplungsmittel (18) vom Typ Kardangelenk umfasst, um eine spannungsfreie Drehung der ersten Spindel (10) zu gewährleisten.

13. Vorrichtung (100) nach Anspruch 12, **dadurch gekennzeichnet, dass** mindestens der Reitstock (2) zweite Motorisierungsmittel (17) umfasst, die so angeordnet sind, dass sie die zweite Spindel (20) um die zweite Drehachse (D2) in Drehung versetzen, und mit den ersten Motorisierungsmitteln synchronisierbar sind, und zwischen den zweiten Motorisierungsmitteln (17) und der zweiten Spindel (20) zweite kardanische Kupplungsmittel (16) aufweist, um eine spannungsfreie Drehung der zweiten Spindel (20) zu gewährleisten.

14. Vorrichtung (100) nach Anspruch 1, **dadurch gekennzeichnet, dass** der zweite Stift (20) drehverrückt ist.

15. Vorrichtung (100) nach Anspruch 1, **dadurch gekennzeichnet, dass** die Vorrichtung (100) Mittel zur mikrometrischen Einstellung und/oder Messung (60) der relativen Position des Reitstocks (2) in Bezug auf den Spindelstock (1) in der gemeinsamen Richtung (D) umfasst.

16. Vorrichtung (100) nach Anspruch 1, **dadurch gekennzeichnet, dass** die Vorrichtung (100) Mittel zur seitlichen Einstellung (70) der Position der zweiten Drehachse (D2) in Bezug auf die erste Drehachse (D1) aufweist.

17. Vorrichtung (100) nach Anspruch 1, **dadurch gekennzeichnet, dass** die Körper des Spindelstocks (1), der ersten Spindel (10), des Reitstocks (2) und der zweiten Spindel (20), aus nichtmagnetischem Material bestehen, um den magnetischen Fluss nicht von der gemeinsamen Richtung (D) weg zu streuen.

18. Vorrichtung (100) nach Anspruch 1, **dadurch gekennzeichnet, dass** der Spindelstock (1) und/oder der Reitstock (2) mindestens einen Dehnungsmessstreifen zur Messung der Axialkraft in der gemeinsamen Richtung (D) und/oder zum Vergleich mit einem Sollwert der Axialkraft aufweist.

19. Vorrichtung (100) nach Anspruch 1, **dadurch gekennzeichnet, dass** die Vorrichtung (100) ein Hauptgestell (50) aufweist, das so angeordnet ist, dass es die gemeinsame Sohle (3) direkt oder indirekt trägt und Sichtmittel (80) trägt, die so angeordnet sind, dass sie einen von zwei sogenannten Mikrozentrierern (5) gehaltenen Drehteil für die Uhrmacherei in dem Raum (90) beobachten und/oder messen, und das Mittel zur Einstellung der Position (81) der Sichtmittel (80) aufweist.

20. Vorrichtung (100) nach Anspruch 19, **dadurch gekennzeichnet, dass** der Hauptrahmen (50) so angeordnet ist, dass er die gemeinsame Sohle (3) indirekt über mindestens eine Drehplatte (500) trägt, die so angeordnet ist, dass sie einen Drehteil für die Uhrmacherei in verschiedenen Positionen im Schwerkraftfeld präsentiert.

21. Vorrichtung (100) nach Anspruch 19, **dadurch gekennzeichnet, dass** die Vorrichtung (100) Mittel zur Analyse (1010) der von den Sichtmitteln (80) gemachten Bilder und/oder Messungen in Bezug auf Sollwerte, Mittel zur Berechnung der Abweichungen (1020) und Mittel zur Verbindung (1030) mit einem integrierten System zur Verwaltung der Produktqualität (1040) und/oder zur Verwaltung der Produktion (1050) aufweist, um die Einstellungen der Produktionsmittel in Abhängigkeit von den Abweichungen zu korrigieren.

## Claims

1. Geometric inspection device (100) for horological wheel sets, which device includes a headstock (1) carrying a first rotatable spindle (10) with a first bore (101) defining a first axis of rotation (D1), and a tailstock (2) carrying a second spindle (20) defining a second axis of rotation (D2), which headstock and tailstock are arranged on a common sole (3) relative to which at least said headstock (1) and/or said tailstock (2) can move with at least one degree of freedom translationally along alignment guide means (4) in a common direction (D) parallel to said first axis of rotation (D1), said device (100) including means arranged to ensure or adjust the coaxiality of said second axis of rotation (D2) relative to said first axis of rotation (D1), said second spindle (20) including a second bore (102) of the same diameter as said first bore (101), said device (100) including a plurality of removable and interchangeable micro-centring devices (5), each arranged to be inserted indifferently into said first bore (101) or said second bore (102), and each including a peripheral shoulder (590) whose diameter is arranged to allow it to slidingly fit tightly with said first bore (101) or said second bore (102), **characterised in that** each said micro-centring device (5) includes a ferromagnetic or magnetic pole core (42) arranged to cooperate, by attraction, with a magnetic pole (41) included in said headstock (1) and/or said tailstock (2) and which defines a magnetic field of revolution about said first axis of rotation (D1) in a space (90) separating said headstock (1) and said tailstock (2), or consists of a said pole core (42).

2. Device (100) according to claim 1, **characterised in that** said tailstock (2) includes resilient return means (21) working to push said tailstock (20) towards said headstock (10) and to dampen the recoil of said tailstock, and set at 0.2 N.

3. Device (100) according to claim 1, **characterised in that** at least one said micro-centring device (5) constitutes a cartridge which includes a tubular body (43) whose outside diameter is arranged to allow it to slidingly fit tightly with said first bore (101) or second bore (102), which tubular body (43) encloses a said ferromagnetic or magnetic pole core (42).

4. Device (100) according to claim 1, **characterised in that** at least one said micro-centring device (5) includes means for concentrating an axial magnetic field, to which it is subjected at a first axial end opposite said space (90) and/or which said at least one said removable centring device (5) generates, about said common direction (D), at a second end facing said space (90).

5. Device (100) according to claim 4, **characterised in that** at least one said micro-centring device (5) constitutes a cartridge which includes a tubular body (43) whose external diameter is arranged to allow it to slidingly fit tightly with said first bore (101) or second bore (102), which tubular body (43) encloses a said ferromagnetic or magnetic pole core (42) and constitutes said means for concentrating said axial magnetic field.

6. Device (100) according to claim 1, **characterised in that** at least one said micro-centring device (5) includes, on said space (90) side, a gripper (51) arranged to cooperate by mechanical contact with an axial end of a horological wheel set, in order to drive said axial end rotatably when said micro-centring device (5) is subjected to a rotation imparted thereto by said headstock (1) or said tailstock (2).

7. Device (100) according to claim 6, **characterised in that** said gripper (51) includes a male or female conical support toothing (58), arranged to cooperate with an axial end of a horological wheel set for driving said wheel set rotatably.

8. Device (100) according to claim 6, **characterised in that** said gripper (51) has, at its surface for driving a said wheel set, a roughness of between 2 micrometres Ra and 5 micrometres Ra.

9. Device (100) according to claim 1, **characterised in that** at least one said micro-centring device (5) includes, on said space (90) side, a ferromagnetic or magnetic pole mass (52) arranged to cooperate, by magnetic attraction or repulsion, with a magnetic or ferromagnetic axial end of a horological wheel set, said pole mass (52) being juxtaposed or merged with said pole core (42).

10. Device (100) according to claim 9, **characterised in that** said pole mass (52) is arranged to transmit a rotational driving torque to a magnetic or ferromagnetic axial end of a horological wheel set.

11. Device (100) according to claim 1, **characterised in that** at least one said micro-centring device (5) includes, on said space (90) side, a support mass (53) made of a material that is harder than that of the horological wheel sets to be inspected, or made of ruby, which is arranged to limit the axial travel of an axial end of a horological wheel set.

12. Device (100) according to claim 1, **characterised in that** at least said headstock (1) includes first motorisation means (19) arranged to drive said first spindle (10) rotatably about said first axis of rotation (D1), and includes, between said first motorisation means (19) and said first spindle (10), first coupling means (18) of the cardan type to ensure unrestricted rotation of said first spindle (10).

13. Device (100) according to claim 12, **characterised in that** at least said tailstock (2) includes second motorisation means (17) arranged to drive said second spindle (20) rotatably about said second axis of rotation (D2), and synchronisable with said first motorisation means, and includes, between said second motorisation means (17) and said second spindle (20), second coupling means (16) of the cardan type to ensure unrestricted rotation of said second spindle (20).

14. Device (100) according to claim 1, **characterised in that** said second spindle (20) is free to rotate.

15. Device (100) according to claim 1, **characterised in that** said device (100) includes means (60) for the micrometric adjustment and/or measurement of the relative position of said tailstock (2) relative to said headstock (1) in said common direction (D).

16. Device (100) according to claim 1, **characterised in that** said device (100) includes means (70) for the lateral adjustment of the position of said second axis of rotation (D2) relative to said first axis of rotation (D1).

17. Device (100) according to claim 1, **characterised in that** the bodies of said headstock (1), of said first spindle (10), of said tailstock (2) and of said second spindle (20) are made of non-magnetic material so as not to diffuse the magnetic flux away from said common direction (D).

18. Device (100) according to claim 1, **characterised in that** said headstock (1) and/or said tailstock (2) includes at least one strain gauge for measuring the axial force in said common direction (D), and/or for comparing said axial force with a setpoint value thereof.

19. Device (100) according to claim 1, **characterised in that** said device (100) includes a main frame (50) arranged to carry said common sole (3) directly or indirectly, and to carry viewing means (80) arranged to observe and/or measure a timepiece held by two said micro-centring devices (5), in said space (90), and including means (81) for adjusting the position of said viewing means (80).

20. Device (100) according to claim 19, **characterised in that** said main frame (50) is arranged to indirectly carry said common sole (3) through at least one rotary plate (500) arranged to present a said horological wheel set in different positions in the field of gravity.

21. Device (100) according to claim 19, **characterised in that** said device (100) includes means (1010) for analysing the images and/or measurements made by said viewing means (80) in relation to setpoint values, means (1020) for computing the deviations, and means (1030) for connecting to an integrated product quality management system (1040) and/or production management system (1050), in order to correct the settings of the production means according to said deviations.
